# EUROPEAN PATENT APPLICATION

(11) **EP 3 473 591 A1**
(43) Date of publication of application: **24.04.2019**
(21) Application number: 18204508.8
(22) Date of filing: 16.07.2012
(51) Int. Cl.: B68G 5/02, A47C 27/14, A47C 7/18, B29C 33/42, C08J 9/00, B29C 44/12, B60N 2/70, B68G 11/04, B68G 13/04, B29L 31/58, B29D 99/00, B29C 44/02

(54) **FOAM SEAT ELEMENT, AND PROCESS AND MOLD FOR PRODUCING SAME**

(30) Priority: 14.07.2011 US 201161457943 P
(62) Divisional of application: 12811813.0
(71) Applicant: Proprietect L.P., Toronto, ON M5X 1G5 (CA)
(72) Inventor: ROSSI, Pasquale, Ontario, N7T 7H6 (CA); SAN MIGUEL, Edgardo A., Ontario, NIE 7H5 (CA)
(74) Representative: Dr. Weitzel & Partner

(57) **Abstract**

There is described a padded element comprising a foam substrate (105, 205) having disposed therein a first internal surface and a second internal surface opposed to the first internal surface, the first internal surface being interposed between an outer surface of the foam substrate and the second internal surface, at least one of the first internal surface and the second internal surface comprising a textured portion (115, 125, 215, 225). The provision of such a textured surface creates a contacting interface between below or remote from the A-surface of the foam element. This interface has different properties than the exposed surface of the seating element (100, 200). By adopting this internal interface approach to one or more zones of foam element, it is possible to confer different qualities of comfort and feel to the outer surface of the foam element.

## Description

### CROSS-REFERENCE TO RELATED APPLICATION

The present application claims the benefit under 35 U.S.C. §119(e) of provisional patent application S.N. 61/457,943, filed July 14, 2011, the contents of which are hereby incorporated by reference.

### FIELD OF THE INVENTION

In one of its aspects, the present invention relates to a foam seat element, preferably a foam vehicular seat element. In another of its aspects, the present invention relates to a process for producing a foam seat element, preferably a vehicular seat element. In yet another of its aspects, the present invention relates to a mold for producing a molded element, preferably a molded foam seat element, more preferably a molded foam vehicular seat element.

### DESCRIPTION OF THE PRIOR ART

Passenger seats in vehicles, such as automobiles, are typically fabricated from a foam (usually a polyurethane foam) material which is molded into the desired shape and covered with an appropriate trim cover. The foamed material is selected to provide passenger comfort by providing a resilient seat and the trim cover is selected to provide the desired aesthetic properties.

In recent years, seats such as vehicular seats have been developed to confer one or more of the following to the seat: comfort, climate control, occupant detection and the like.

One area that has received particular attention is the provision of dual density or dual firmness seat components that are more dense or firmer in the peripheral portions of the seat thereby conferring to the occupant a snug or "wrapped-in" feel. This is especially important in performance vehicles which are designed such that turning at relatively high speed may be accomplished. However, there is an ongoing challenge to balance support provided by the seat with comfort of the occupant.

Dual density or dual firmness seat elements are expensive to produce and, in many cases, alter the feel of the supporting surface of the seat only in areas where it is perceived to be important to have different firmness properties. In other words, the conventional dual density or dual firmness seat elements use a generally coarse approach to provision of variable density or firmness.

Further, dual (or multi) density or dual (or multi) firmness seats typically require the use of two or more types of foam (e.g., molded, free rise, bead and the like) which are typically produced separately and secured together increasing the production time and costs of the final seat product. Alternatively, certain dual (or multi) firmness seats are made by molding or otherwise securing an insert (e.g., wire components, flexolators and the like) to a foam substrate.

International Publication No. WO 2006/102751 [San Miguel et al. (San Miguel)] teaches a foam seat element, a mold for production thereof and a method to manufacture the mold. The foam seat element taught by San Miguel comprises a seating surface in which one or more textured surfaces, the same or different, are created. The provision of such textured surfaces makes it possible to achieve in a single density part the "dual firmness" (or multi-firmness) comfort or feel that is conveniently achieved using multi-density foam pieces in a seat element. One of the advantages of the approach in San Miguel is it is possible to confer to the seat element a soft feel touch as an alternative to conventional so-called plus padding.

While the teachings in San Miguel represent an advance in the art, there is still room for improvement.

Specifically, when applying the teachings of San Miguel to vehicular car seats, it is conventional to create the one or more textured surfaces in the so-called A-surface of the vehicular seat. In doing this, there is a likelihood that the textured surface can be felt or seen through the trim cover (leather or upholstery) used to cover the foam seat element - this is also known in the art as "read through". Automotive companies have continually increased the specifications and requirements for fit and finish of vehicular seats and the occurrence of "read through" in a vehicular seat is considered a disadvantage.

Accordingly, it would be desirable to have a foam element which, on the one hand, maintains the technical advantage of San Miguel (i.e., the ability to have different zones of comfort or feel in a surface of a foam element while a using a single density foam) while, on the other hand, obviating or mitigating the occurrence of "read through" in the A-surface of the foam element when it is adapted for vehicular seats.

It would be particularly advantageous if such an improvement could be implemented without the requirement for large capital expenditure.

### SUMMARY OF THE INVENTION

It is an object of the present invention to obviate or mitigate at least one of the above-mentioned disadvantages of the prior art.

Accordingly, in one of its aspects, the present invention provides a padded element comprising a foam substrate having disposed therein a first internal surface and a second internal surface opposed to the first internal surface, the first internal surface being interposed between an outer surface of the foam substrate and the second internal surface, at least one of the first internal surface and the second internal surface comprising a textured portion.

In another of its aspect, the present invention provides a mold for production of a molded element, the mold comprising a first mold portion and a second mold portion engageable to define a mold cavity, the mold further comprising at least one insert element having a textured surface and configured to create a first internal surface and a second internal surface opposed to one another in molded element.

In a preferred embodiment, the padded element is comprised in a seat element. In this preferred embodiment, the seat element preferably comprises a molded foam seat element, more preferably a molded foam element comprising a unitary foam portion. An advantage of using such a molded foam element in the present seat element is the presence of a skin on the surface of one or both of the first internal surface and the second internal surface. The presence of the skin is characterized by the internal surface (first and/or second) having a greater density at the surface (e.g., 1 mm depth) as compared to the central or core region remote from the internal surafce. Density can be determined using ASTM D-3574. While not wishing to be bound by any particular theory or mode of action, it is believed that the presence of such a skin (e.g., as distinct from the case where the peaks are simply glued to and/or the valleys are simply cut out of the seating surface element) confers a desirable combination of support and comfort to an occupant of the seat element.

Thus, the present inventors have discovered an approach by which it is possible to achieve the benefits described in San Miguel while obviating or mitigating the occurrence of "read through". Specifically, in the present padded element in the form of a seat element, an internal interface is created between a pair of internal surfaces disposed within with the body of the foam substrate, wherein at least one of the internal surfaces is textured. In a highly preferred embodiment, the pair of internal surfaces disposed within the body of the foam substrate combine to form one or more cavities in the foam substrate (e.g., by the provision of one interal surface have a textured portion and the other internal surface being untextured). The provision of such a textured surface creates a contacting interface (either at rest or when an occupant sits on the seat) between below or remote from the A-surface of the foam element. This interface has different properties than the exposed surface of the seating element. By adopting this internal interface approach to one or more zones of foam element, it is possible to confer different qualities of comfort and feel to the outer surface of the foam element (e.g., A-surface of a vehicular seat element) even though the appearance of that outer surface may be relatively non-textured. In this manner, the occurrence of "read through" described above is obviated or mitigated.

A number of different embodiments can be used to adopt this approach.

First, it is possible to have a foam seating element which is a separate piece from the foam substrate. Alternatively, it is possible to have the foam seating portion created with the foam substrate in a single mold resulting in the production of a so-called fold-over construction which allows the use of a single tool to produce the entire foam element (compared to the first embodiment which requires separate tools to produce the foam seating element and the foam substrate). Both of these embodiments allow for the use of a substantially complementary pair of internal surfaces in the foam seating element and foam substrate.

A particularly preferred alternate embodiment relates to the use of a mold having one or more tongue (or insert) elements which produce the above-mentioned interface in situ in a single piece of foam. One advantage of this approach is that tooling and manufacturing (re. labour) costs are optimized. Further, the tongue-element can be retrofitted to existing molds thereby allowing implementation of the present invention without the need to construct custom molds and incur the associated capital costs.

The foam element containing the first internal surface and the second internal surface described above may be the same or different, regardless of whether the foam element is a unity piece of foam or the first internal surface and the second internal surface are comprised in separate pieces of foam. If the foam element containing the first internal surface and the second internal surface described above is different, it may be achieved by pouring different formulations for the foam. Preferably, the result is in foam elements for the first internal surface and the second internal foam surface that differ in respect of one or more of the following: density, hardness, indentation force deflection, sound absorption, sound transmission loss, hysteresis, tensile strength and combinations of two or more of these.

Of course, those of skill in the art will recognize other advantages accruing from the present seat element based on the present specification.

### BRIEF DESCRIPTION OF THE DRAWINGS

Embodiments of the present invention will be described with reference to the accompanying drawings, wherein like reference numerals denote like parts, and in which:
Figure 1 illustrates a perspective view of a first embodiment of the seat element of the present invention;
Figure 2 illustrates a sectional view of the seat element illustrated in Figure 1;
Figure 3 illustrates an enlarged portion of the seat element illustrated in Figure 2;
Figure 4 illustrates a second embodiment of the seat element of the present invention;
Figure 5 illustrates a sectional view of the seat element illustrated in Figure 4;
Figure 6 illustrates production of the final seat element illustrated in Figure 4;
Figure 7 illustrates a perspective view of a mold suitable for use in producing a third embodiment of the seat element of the present invention;
Figures 8-12 illustrate in sequential manner production of the third embodiment of the seat element of the present invention using the mold illustrated in Figure 7;
Figures 13-14 illustrate a modification of the mold and seat element illustrated in Figures 7-12; and
Figure 15 illustrates a sectional view of a seat element according to the third embodiment of the present invention.

### DETAILED DESCRIPTION OF THE PREFERRED EMBODIMENTS

Embodiments of the present invention will be described with reference to the accompanying drawings, wherein like reference numerals denote like parts, and in which:In one of its aspects, the present invention relates to a padded element comprising a foam substrate having disposed therein a first internal surface and a second internal surface opposed to the first internal surface, the first internal surface being interposed between an outer surface of the foam substrate and the second internal surface, at least one of the first internal surface and the second internal surface comprising a textured portion. Preferred embodiments of the padded element may include any one or a combination of any two or more of any of the following features:
- the first internal surface comprises a textured portion and the second internal surface is substantially untextured;
- the first internal surface is substantially untextured and the second internal surface comprises a textured portion;
- both of the first internal surface and the second internal surface comprise a textured portion;
- the first internal surface and the second internal surface are in a spaced relationship at a resting position of the padded element;
- the first internal surface and the second internal surface are in a contacting relationship at a resting position of the padded element;
- the foam substrate is molded;
- the foam substrate is molded from a unitary foam portion;
- the textured portion comprises a plurality of peak portions and a plurality of valley portions;
- each peak portion comprises an apex portion;
- the apex portion comprises a first pointed portion;
- the apex portion comprises a first rounded portion;
- the apex portion comprises a first flat portion;
- each valley portion comprises a nadir portion;
- the nadir portion comprises a second pointed portion;
- the nadir portion comprises a second rounded portion;
- the nadir portion comprises a second flat portion;
- each peak portion comprises an apex portion and each valley portion comprises a nadir portion;
- the apex portion and the nadir portion comprise the same profile;
- the apex portion and the nadir portion comprise a different profile;
- the apex portion comprises a first pointed portion;
- the apex portion comprises a first rounded portion;
- the apex portion comprises a first flat portion;
- the nadir portion comprises a second pointed portion;
- the nadir portion comprises a second rounded portion;
- the nadir portion comprises a second flat portion;
- each peak portion in the plurality of peak portions is substantially elongate;
- the plurality of peak portions are disposed substantially parallel to one another;
- each valley portion in the plurality of valley portions is substantially elongate;
- the plurality of peak portions comprises a first series of elongate peak portions and a second series of elongate peak portions, the first series and the second series being disposed transverse to one another;
- the plurality of peak portions comprises a first series of elongate peak portions and a second series of elongate peak portions, the first series and the second series being disposed non-parallel to one another;
- the plurality of peak portions comprises a first series of elongate peak portions and a second series of elongate peak portions, the first series and the second series being disposed orthogonal to one another;
- the plurality of valley portions comprises a first series of elongate valley portions and a second series of elongate valley portions, the first series and the second series being disposed transverse to one another;
- the plurality of valley portions comprises a first series of elongate valley portions and a second series of elongate valley portions, the first series and the second series being disposed non-parallel to one another;
- the plurality of valley portions comprises a first series of elongate valley portions and a second series of elongate valley portions, the first series and the second series being disposed orthogonal to one another;
- each peak portion in the plurality of peak portions is substantially elongate and each valley portion in the plurality of valley portions is substantially elongate;
- the plurality of peak portions and the plurality of valley portions are disposed in a substantially parallel relationship;
- the plurality of peak portions is comprised in a plurality of substantially upstanding projections;
- a cross-section of each projection comprises a rectangle;
- a cross-section of each projection comprises a trapazoid;
- a cross-section of each projection comprises a bi-laterally symmetrical trapazoid;
- a cross-section of each projection comprises an ogival shape;
- a cross-section of adjacent projections comprises a scallop shape;
- a cross-section of valley portions between adjacent projections comprises a scallop shape;
- each projection comprises a cloister vault shape;
- the plurality of projections comprise substantially the same shape;
- the plurality of projections comprise substantially the same dimension;
- the plurality of projections comprise substantially the same shape and the same dimension;
- the plurality of projections comprise different shapes;
- the plurality of projections comprise different dimensions;
- the plurality of projections comprise different shapes and different dimensions;
- the plurality of projections comprise substantially the same shape and different dimensions;
- the plurality of projections comprise different shapes and the same dimension;
- at least two valley portions are interconnected to one another;
- the plurality of valley portions are interconnected to one another;
- at least two valley portions are independent of one another;
- the plurality of valley portions are independent of one another;
- at least two peak portions are interconnected to one another;
- the plurality of peak portions are interconnected to one another;
- at least two peak portions are independent of one another;
- the plurality of peak portions are independent of one another;
- the textured portion comprises a first crenellated pattern;
- the textured portion comprises a first crenellated pattern and a second crenellated pattern disposed in a transverse relationship with respect to one another;
- the textured portion comprises a first crenellated pattern and a second crenellated pattern disposed in an orthogonal relationship with respect to one another;
- the textured comprises a first dentellated pattern;
- the textured portion comprises a first dentellated pattern and a second dentellated pattern disposed in a transverse relationship with respect to one another;
- the textured portion comprises a first dentellated pattern and a second dentellated pattern disposed in an orthogonal relationship with respect to one another;
- the seating surface element comprises a plurality of sections, each section comprising a plurality of peak portions and a plurality of valley portions;
- the plurality of peak portions in each section are the same;
- the plurality of valley portions in each section are the same;
- the plurality of peak portions and the plurality of valley portions in each section are the same;
- the plurality of peak portions in each section are different;
- the plurality of valley portions in each section are different;
- the plurality of peak portions and the plurality of valley portions in each section are different;
- the padded element further comprises at least one groove that separates at least a portion of a pair of adjacent sections of the plurality of sections;
- the foam substrate comprises an isocyanate-based foam;
- the foam substrate comprises a polyurethane foam;
- the foam substrate comprises a polyolefin-based foam;
- the foam substrate comprises a polypropylene foam;
- the foam substrate comprises a polyethylene foam;
- the foam substrate comprises a uniform density; and/or
- the foam substrate comprises a variable density.

In a preferred embodiment, the padded element is in the form of a seat element. In this preferred embodiment, it is further preferred that the seat element comprises a seating surface portion having comprised therein the outer surface and the first internal surface.

In an even more preferred embodiment, the present invention relates to a vehicular seat comprising the above-mentioned seat element. This includes a vehicular seat bottom, a vehicular seat or a complete vehicular seat comprising both of these.

In another of its aspects, the present invention relates to a mold for production of a molded element, the mold comprising a first mold portion and a second mold portion engageable to define a mold cavity, the mold further comprising at least one insert element having a textured surface and configured to create a first internal surface and a second internal surface opposed to one another in molded element. Preferred embodiments of the mold may include any one or a combination of any two or more of any of the following features:
- the textured surface comprises a plurality of peak portions and a plurality of valley portions;
- each peak comprises an apex portion;
- the apex portion comprises a first pointed portion;
- the apex portion comprises a first rounded portion;
- the apex portion comprises a first flat portion;
- each valley comprises a nadir portion;
- the nadir portion comprises a second pointed portion;
- the nadir portion comprises a second rounded portion;
- the nadir portion comprises a second flat portion;
- each peak comprises an apex portion and each valley comprises a nadir portion;
- the apex portion and the nadir portion comprise the same profile;
- the apex portion and the nadir portion comprise a different profile;
- the apex portion comprises a first pointed portion;
- the apex portion comprises a first rounded portion;
- the apex portion comprises a first flat portion;
- the nadir portion comprises a second pointed portion;
- the nadir portion comprises a second rounded portion;
- the nadir portion comprises a second flat portion;
- each peak portion in the plurality of peak portions is substantially elongate;
- the plurality of peak portions are disposed substantially parallel to one another;
- each valley portion in the plurality of valley portions is substantially elongate;
- the plurality of peak portions comprises a first series of elongate peak portions and a second series of elongate peak portions, the first series and the second series being disposed transverse to one another;
- the plurality of peak portions comprises a first series of elongate peak portions and a second series of elongate peak portions, the first series and the second series being disposed non-parallel to one another;
- the plurality of peak portions comprises a first series of elongate peak portions and a second series of elongate peak portions, the first series and the second series being disposed orthogonal to one another;
- the plurality of valley portions comprises a first series of elongate valley portions and a second series of elongate valley portions, the first series and the second series being disposed transverse to one another;
- the plurality of valley portions comprises a first series of elongate valley portions and a second series of elongate valley portions, the first series and the second series being disposed non-parallel to one another;
- the plurality of valley portions comprises a first series of elongate valley portions and a second series of elongate valley portions, the first series and the second series being disposed orthogonal to one another;
- each peak portion in the plurality of peak portions is substantially elongate and each valley portion in the plurality of valley portions is substantially elongate;
- the plurality of peak portions and the plurality of valley portions are disposed in a substantially parallel relationship;
- the plurality of peak portions is comprised in a plurality of substantially upstanding projections;
- a cross-section of each projection comprises a rectangle;
- a cross-section of each projection comprises a trapazoid;
- a cross-section of each projection comprises a bi-laterally symmetrical trapazoid;
- a cross-section of each projection comprises an ogival shape;
- a cross-section of adjacent projections comprises a scallop shape;
- a cross-section of valley portions between adjacent projections comprises a scallop shape;
- each projection comprises a cloister vault shape;
- the plurality of projections comprise substantially the same shape;
- the plurality of projections comprise substantially the same dimension;
- the plurality of projections omprise substantially the same shape and the same dimension;
- the plurality of projections comprise different shapes;
- the plurality of projections comprise different dimensions;
- the plurality of projections comprise different shapes and different dimensions;
- the plurality of projections comprise substantially the same shape and different dimensions;
- the plurality of projections comprise different shapes and the same dimension;
- at least two valley portions are interconnected to one another;
- the plurality of valley portions are interconnected to one another;
- at least two valley portions are independent of one another;
- the plurality of valley portions are independent of one another;
- at least two peak portions are interconnected to one another;
- the plurality of peak portions are interconnected to one another;
- at least two peak portions are independent of one another;
- the plurality of peak portions are independent of one another;
- the seating surface molding element comprises a first crenellated pattern;
- the seating surface molding element comprises a first crenellated pattern and a second crenellated pattern disposed in a transverse relationship with respect to one another;
- the seating surface molding element comprises a first crenellated pattern and a second crenellated pattern disposed in an orthogonal relationship with respect to one another
- the seating surface molding element comprises a first dentellated pattern;
- the seating surface molding element comprises a first dentellated pattern and a second dentellated pattern disposed in a transverse relationship with respect to one another;
- the seating surface molding element comprises a first dentellated pattern and a second dentellated pattern disposed in an orthogonal relationship with respect to one another;
- the seating surface element comprises a plurality of sections, each section comprising a plurality of peak portions and a plurality of valley portions;
- the plurality of peak portions in each section are the same;
- the plurality of valley portions in each section are the same;
- the plurality of peak portions and the plurality of valley portions in each section are the same;
- the plurality of peak portions in each section are different;
- the plurality of valley portions in each section are different;
- the plurality of peak portions and the plurality of valley portions in each section are different;
- the at least one insert element is affixed to one of the first mold portion and the second mold portion;
- the at least one insert element is moveable with respect to one or both of the first mold portion and the second mold portion to facilate demolding of the molded element;
- the at least one insert element is pivotally moveable with respect to one or both of the first mold portion and the second mold portion to facilate demolding of the molded element;
- the first mold portion is a lid and and the second mold portion is a bowl;
- the at least one insert element is affixed to the bowl;
- the at least one insert element is moveable with respect to the bowl to facilate demolding of the molded element;
- the at least one insert element is pivotally moveable with respect to the bowl to facilate demolding of the molded element; and/or
- the mold comprises a plurality of insert elements, each insert element comprising a textured surface.

In another of its aspects, the present invention relates to process for production of a molded element in the above-described, the process comprising the steps of:
(i) dispensing a moldable composition in the mold cavity;
(ii) substantially completely encompassing the at least one insert element with the moldable composition; and
(iii) curing the moldable composition to produce the molded element.

In another of its aspects, the present invention relates to process for production of a foamed element in the above-described, the process comprising the steps of:
(i) dispensing a foamble composition in the mold cavity;
(ii) expanding the foamable composition; and
(iii)substantially completely encompassing the at least one insert element with the foamable composition.

Preferably, the foamable composition is a liquid. More preferably, the foamable composition comprises a foamable polyurethane composition.

In the above-mention process aspects of the present invention, it is preferred that the foamed element is a seat element, more preferably, a vehicular seat bottom, a vehicular seat back or a vehicular seat comprising the combination of these.

Accordingly, a highly preferred aspect of the present invention relates to a seat element. Preferably, a seat element is comprised in a vehicular or passenger seat. As used throughout this specification, the term "seat" is intended to have its conventional meaning and includes one or both of a bottom or cushion (i.e., the portion of the seat on which the occupant sits) and a back or backrest (i.e., the portion of the seat which supports the back of the occupant). As is known in the automotive, airline and related industries, a "seat" includes both a cushion (or bottom) and a back (or backrest). Thus, the term "seat" includes a seat element such as a cushion (or bottom), a back (or backrest) or a unit construction comprising a cushion (or bottom) and a back (or backrest). It should also be mentioned that a seat element may be considered to be a cushion (or bottom), a back (or backrest), a headrest and/or an armrest.

While highly preferred embodiments of the present invention will be illustrated with reference to a vehicular seat element, in particular a seat cushion (or bottom), it will be appreciated that the present seat element can be used in non-vehicular applications such as domestic and office furniture, stadium seating, theatre seating and the like.

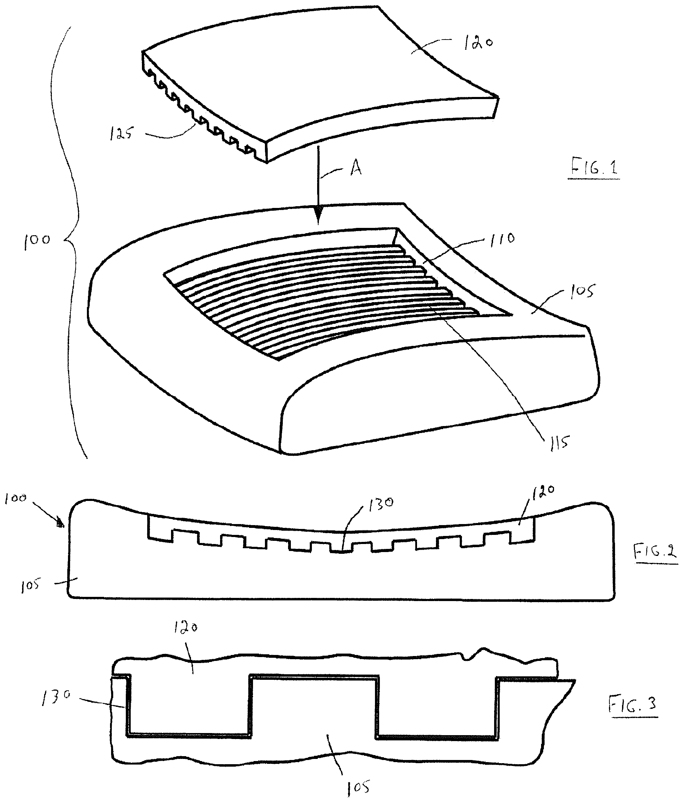

With reference to Figures 1-3, there is illustrated a seat element 100.

Seat element 100 comprises a foam substrate 105. Foam element 105 may be made from conventional foam materials such a polyurethane foam and the like.

Foam substrate 105 comprises a recess 110 disposed in a central region thereof. The bottom surface of this recess has a textured portion 115. In the illustrated embodiment, textured portion 115 has a series of elongate grooves defined by a number of flat peaks and flat valleys.

Foam substrate 100 may be produced in a conventional manner - see for example, San Miguel described above.

As described above, it is preferred that foam substrate 105 is a molded foam, more preferably made from polyurethane. In this preferred embodiment, textured portion 115 would have the skinned surface described above.

As shown in Figure 1, disposed above foam substrate 105 is a seating surface portion 120.

Seating surface portion 120 may be produced independently of foam substrate 105 and can be made from conventional foam materials such as polyurethane foam and the like.

It is possible to produce seating surface portion 120 out of the same or different foam than foam substrate 105. Further, it is possible that seating surface portion 120 and foam substrate 105 can have the same or different densities. The undersigned of seating surface portion 120 comprises a textured surface 125. In this preferred embodiment, textured portion 125 would have the skinned surface described above.

Preferably, textured surface 115 and textured surface 125 are substantially complementary.

With continued reference to Figure 1, when it is desired to produce seat element 100, seating surface portion 120 is lowered in the direction of Arrow A such that a "fit" is created between textured surface 115 and textured surface 125 - see Figure 2. In Figure 2, an interface 130 is created between textured surfaces 115,125. This interface is below the A-surface of seat element 100 while, in the illustrated embodiment, the actual A-surface is relatively non-textured. Once seat element 100 is covered, the occurrence of "read through" is obviated or mitigated. Advantageously, the provision of interface 130 below the A-surface of seat element 100 provides a firmer feel in central portion 110 of seat element as compared to the outer portions of seat element 100.

Of course those of skill in the art will understand that it is possible to use different shapes for the cross-section of textured surfaces 115,125 to modify the type of comfort and feel conferred to seat element 100. It is also possible to use more than one so-called zone with the internal interface created below the A-surface of the foam to provide different zones of comfort and feel in seat element 100. In this regard, all of the textured surfaces described in San Miguel can be utilized in seat element 100 using the approach of creating interface between foam substrate 105 and seating surface portion 120 that is below the A-surface of seat element 100.

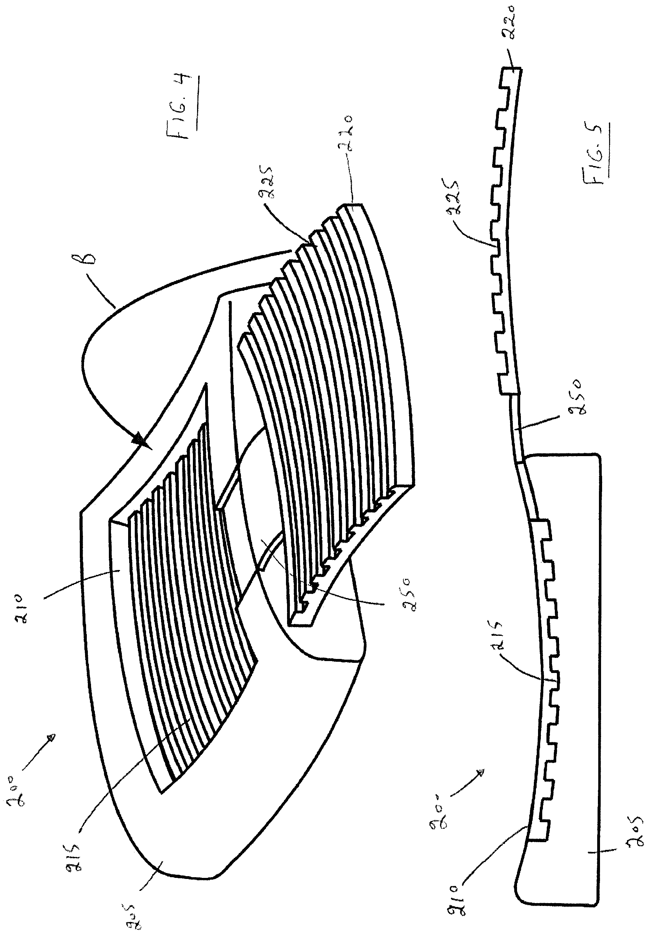

With reference to Figures 4-6, there is illustrated seat element 200.

In Figure 4-6, reference numerals having the same last two digits as reference numerals appearing in Figures 1-3 are intended to denote similar parts.

The major difference between seat element 100 illustrated in Figure 1-3 and seat element illustrated in Figure 4-6 is that seating surface portion 220 in seat element 200 is attached to foam substrate 205 by a connection portion 250.

It will be apparent to those of skill in the art that an advantage of seat element 200 is that it may be produced in a single mold thereby avoiding the increase to costs associated with producing seat element 100.

The choice of materials for foam substrate 205 and seating surface portion 220 described above with reference to seat element 100 applies to seat element 200.

Similarly, textured surfaces 215,225 may be selected using the same approach described above with reference to seat element 100.

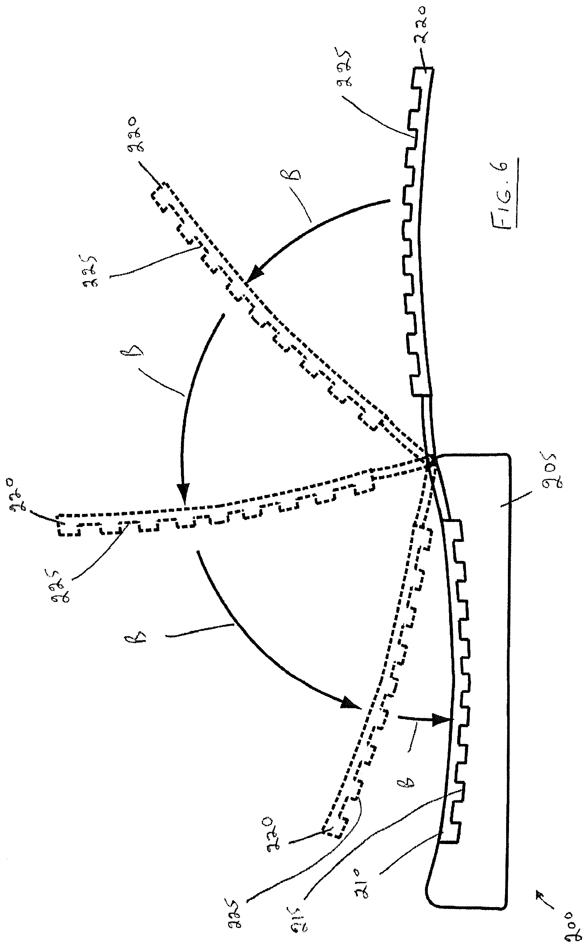

When it is desired to produce seat element 200, seating surface portion 220 is folded in the direction of Arrows B -see Figures 4 and 6. Once seating surface portion 220 is completely folded over and fits into recess portion 210 of foam substrate 205 in a manner whereby textured surfaces 215,225 corporate to form an interface as described above with reference to seat element 100.

It can be seen from Figures 1-6, that the interface between textured surface 115,215 of foam substrate 105,205 and textured surface 125,225 of seating surface portion 120,220 is substantially complementary. While this is preferred, it is possible to select shapes which strictly speaking, are non complementary but create a so-called interference or friction fit. The point is that the shapes of textured surfaces 115,215 of foam substrate 105,205 and 125,225 of seating surface portion 120,220 should be selected so as to secure the pieces together until a trim cover can be applied to seat element 100,200.

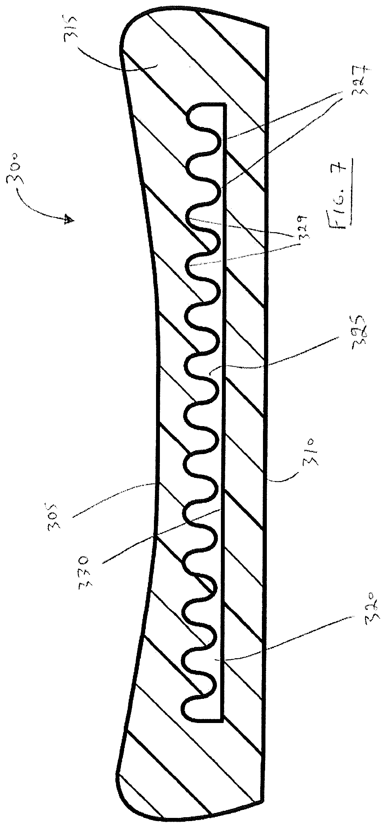

With reference to Figure 7, there is illustrated a seat element 300. Seat element 300 comprises an A-surface 305 and a B-surface 310 opposed to A-surface 305. As can be seen, A-surface is relatively untextured.

Seat element 300 comprises a foam substrate 315. As shown foam substrate 315 comprises a cavity 320 comprised of a textured internal surface 325 in spaced relation with respect to an untextured internal surface 330.

Textured internal surface 325 consists of a series of peaks 327 and valleys 329. In this regard, the convention used is a "peak" is directed into cavity 320 whereas a "valley" is directed away from cavity 320.

In the illustrated embodiment, in a resting state of seat element 300 (i.e., a state in which no occupant is sitting on seat element 300), peaks 327 of textured internal surface 325 do not contact untextured internal surface 330. It should be understood by those of skill in the art that it is possible to modify seat element 300 such that peaks 327 of textured internal surface 325 are in contact with untextured internal surface 330 even if no occupant is sitting on seat element 300.

Seat element 300 is a particularly preferred embodiment of the present padded element. In this regard, it is to be noted that the provision of textured internal surface 325 in cavity 320 of foam substrate 315 provides improved comfort of seat element 300 while obviating or mitigate the occurrence of "read through" described above (e.g., compared to placement of the textured surface directly on A-surface 305). In this regard, the precise texture pattern can be modified and different zones of different textures can be used to confer a different comfort and feel to A-surface 305 when an occupant sits on seat element 300 - see, for example San Miguel described above for a descript of various examples of textured surfaces that may be used.

As illustrated, seat element 300 is made from a unitary foam substrate 315 - this is a preferred embodiment of the present padded element. Of course, it is possible to modify this illustrated embodiment by coupling distinct foam elements or by using the so-called flap-over approach as described above with reference to Figures 1-3 and 4-6, respectively.

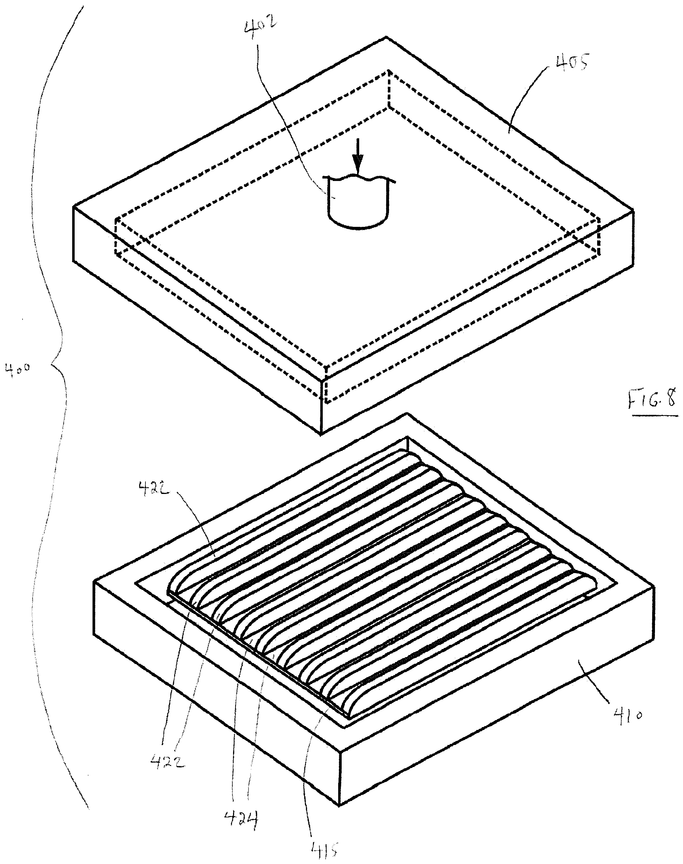

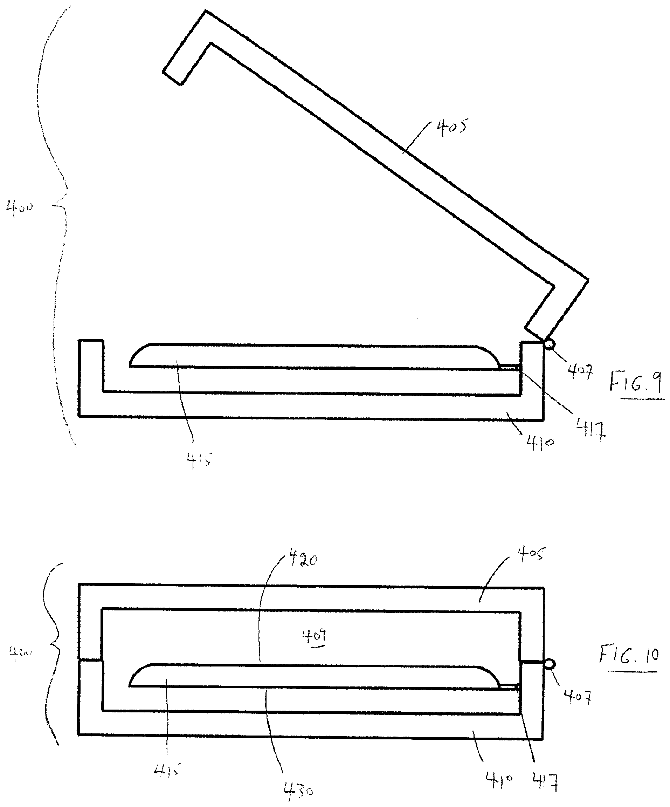

With reference to Figures 8-13, there is illustrated a mold 400 for production of seat element 300. Thus, mold 400 comprises a lid 405 and a bowl 410. As illustrated particularly in Figures 9 and 10, lid 405 and bowl 410 are coupled in a pivoting arrangement via a hinge 407 (or other suitable means) between an open position (Figure 9) and a closed position (Figure 10). In the closed of mold 400, there is a defined a mold cavity 420.

As shown in Figures 9 and 10, an insert element 415 is mounted to bowl 410 via a pivot element 417. Insert element 415 comprises a textured surface 420 and a planer surface 430. Textured surface 420 comprises a series of elongate ridge elements 422. Adjacent pairs of elongate ridge elements 422 are separated valley portions 424.

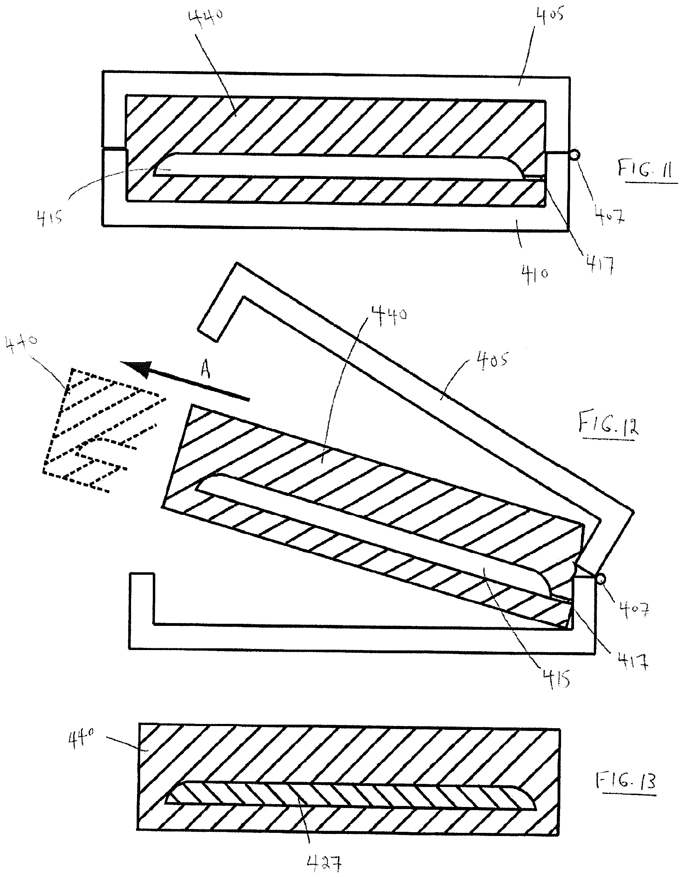

Figures 11-13 illustrate in sequential manner, production of the padded element such as seat element 300 illustrated in Figure 7. Thus, in an initial step, a foamable composition is dispensed from a suitable nozzle 402 (Figure 8) into bowl 410. Lid 405 and bowl 410 are closed and the foamable composition is expanded to fill mold cavity 409 as shown in Figure 11 to produce a foamed part 440.

Next, with reference to Figure 12, lid 405 is swung open. At approximately the same time, insert element 415 is also pivoted in a upward direction toward lid 405 as shown in Figure 12. Foam part 440 is then removed from mold 400 in the direction of arrow A.

Foam part 440 in shown in Figure 13 after it has been removed from mold 400. Peak portions 427 are shown within foam part 440 and represent foam that fills valley portions 424 between elongate ridge elements 422 of insert element 415.

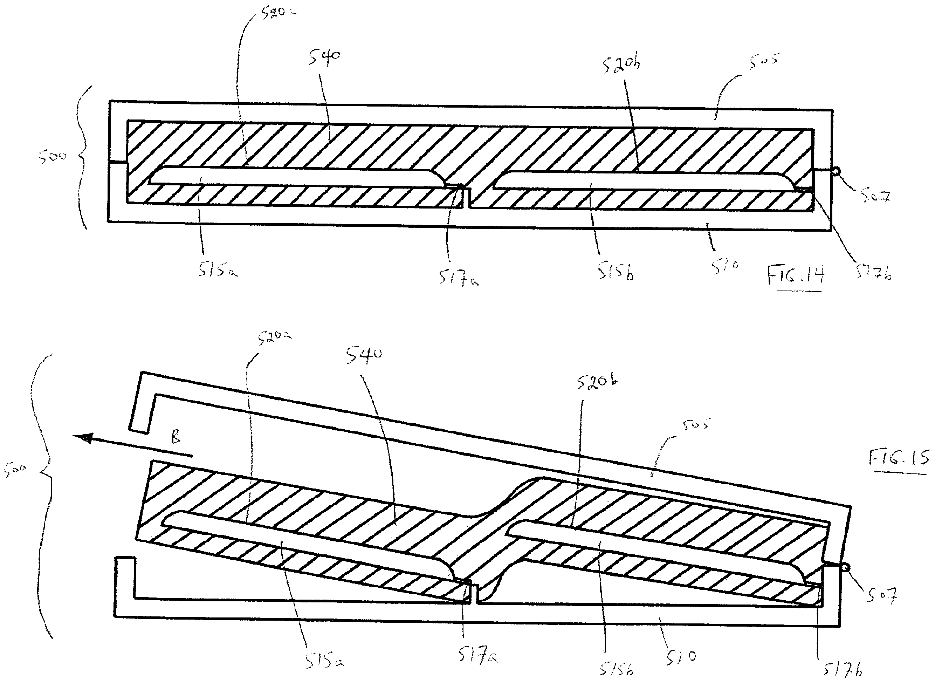

With reference to Figures 14 and 15, there is illustrated a mold 500 which is a modification of mold 400 described above with reference to Figures 8-13. In Figures 14 and 15, reference numerals with the same last two digits as those appearing in Figures 8-13 are intended to denote like parts. Thus, for example, mold 500 comprises a lid 505 and bowl 510. Lid 505 and bowl 510 are in a pivoting arrangement via a hinge 507.

As shown, a modification in mold 500 compared to mold 400 is the provision of two insert elements 515a,515b in mold 500 (cf. single insert element 415 in mold 400). The insert elements may have the same textured surface 520a,520b or the textured surfaces may be different.

For example, if foam part 540 is large, it may be advisable to use multiple insert elements 515a,515b. In addition or alternatively, it is possible to use different texture patterns for textured surfaces 520a,520b to convey different comfort characteristics to foam element 520.

While this invention has been described with reference to illustrative embodiments and examples, the description is not intended to be construed in a limiting sense. Thus, various modifications of the illustrative embodiments, as well as other embodiments of the invention, will be apparent to persons skilled in the art upon reference to this description. It is therefore contemplated that the appended claims will cover any such modifications or embodiments. Further, all of the claims are hereby incorporated by reference into the description of the preferred embodiments.

All publications, patents and patent applications referred to herein are incorporated by reference in their entirety to the same extent as if each individual publication, patent or patent application was specifically and individually indicated to be incorporated by reference in its entirety.

## Claims

1. A padded element comprising a foam substrate having disposed therein a first internal surface and a second internal surface opposed to the first internal surface, the first internal surface being interposed between an outer surface of the foam substrate and the second internal surface, wherein: (i) both of the first internal surface and the second internal surface comprise a textured portion, and (ii) the padded element is comprised in a seat element comprising a seating surface portion have comprised therein the outer surface and the first internal surface.

2. The padded element defined in Claim 1, wherein the first internal surface and the second internal surface are in a contacting relationship at a resting position of the padded element.

3. The padded element defined in any one of Claims 1-2, wherein the foam substrate is molded from a unitary foam portion.

4. The padded element defined in any one of Claims 1-3, wherein the textured portion comprises a plurality of peak portions and a plurality of valley portions.

5. The padded element defined in Claim 4, wherein each peak portion comprises an apex portion and each valley portion comprises a nadir portion.

6. The padded element defined in Claim 5, wherein the apex portion and the nadir portion comprise the same profile.

7. The padded element defined in any one of Claims 4-6, wherein the plurality of peak portions comprises a first series of elongate peak portions and a second series of elongate peak portions, the first series and the second series being disposed transverse to one another.

8. The padded element defined in any one of Claims 4-6, wherein the plurality of valley portions comprises a first series of elongate valley portions and a second series of elongate valley portions, the first series and the second series being disposed transverse to one another.

9. The padded element defined in any one of Claims 4-6, wherein the plurality of peak portions is comprised in a plurality of substantially upstanding projections.

10. The padded element defined in Claim 9, wherein a cross-section of each projection comprises a rectangle, trapezoid, a bi-laterally symmetrical trapezoid, an ogival shape, a scallop shape or a cloister shape.

11. The padded element defined in any one of Claims 9-10, wherein the plurality of projections comprise substantially the same shape and the same dimension.

12. The padded element defined in any one of Claims 1-11, wherein the foam substrate comprises a polyurethane foam or a polyolefin foam such as a propylene foam or a polyethylene foam.

13. The padded element defined in any one of Claims 1-12, wherein the first internal surface and the second internal surface are substantially complementary.

14. A vehicular seat bottom comprising the seat element defined in any one of Claims 1-13.

15. A vehicular seat back comprising the seat element defined in any one of Claims 1-13.
